# EUROPEAN PATENT APPLICATION

(11) **EP 3 216 692 A1**
(43) Date of publication of application: **13.09.2017**
(21) Application number: 17159543.2
(22) Date of filing: 07.03.2017
(51) Int. Cl.: B64C 1/14

(54) **DRAIN MAST**

(30) Priority: 11.03.2016 US 201662306814 P
(71) Applicant: Goodrich Corporation, Charlotte, NC 28217-4578 (US)
(72) Inventor: LEE, Charles A., Akron, OH 44333 (US); GIAMATI, Michael John, Akron, OH 44312 (US)
(74) Representative: Bridge, Kerry Ann

(57) **Abstract**

A drain mast (12, 14) that releases fluid into an airstream includes two fairing bodies (18A, B), with each fairing body (18A, B) having an outer wall (22A, B), an inner wall (24A, B) opposite of the outer wall (22A, B), a drain cavity (26A, B) extending through the inner wall, a mounting portion, and a drain portion (30A, B) opposite of the mounting portion. The two fairing bodies (18A, B) are joined together at their inner walls (24A, B) such that the two mounting portions (28A, B) are adjacent, such that the drain cavities (26A, B) form a mast cavity, and such that the drain portions (30A, B) are adjacent to each other and together form a foot (36). The foot (36) includes a drain outlet (40) connected to the mast cavity, and a post-exit stage positioned downstream of the drain (40) outlet with the post-exit stage being located closer to the mounting portions than the drain outlet (40).

## Description

### INCORPORATIONS BY REFERENCE

The disclosures of U.S. Pat. No. 8,857,768 to Lee et al. and U.S. Pub. No. 2015/0075662 by Giamati are herein incorporated by reference.

### BACKGROUND

The present disclosure relates to drains, and more particularly to drain masts such as those used to drain fluids from within an aircraft to the exterior of the aircraft.

An aircraft drain mast protrudes from a fuselage of an aircraft into the airstream far enough that the discharged media is cleanly swept away. This prevents the discharged fluids from streaking along the fuselage and/or being sucked into an air scoop, for example, for an auxiliary power unit. However, the drain mast contributes to drag along the fuselage and its weight increases the load on the aircraft. Therefore, the geometry and size of the drain mast should be configured to minimize the aerodynamic and gravitational impacts of the drain mast while still allowing the drain fluids to be ejected clear from the aircraft.

### SUMMARY

In to one embodiment, a drain mast that releases fluid into an airstream includes two fairing bodies, with each fairing body having an outer wall, an inner wall opposite of the outer wall, a drain cavity extending through the inner wall, a mounting portion, and a drain portion opposite of the mounting portion. The two fairing bodies are joined together at their inner walls such that the two mounting portions are adjacent, such that the drain cavities form a mast cavity, and such that the drain portions are adjacent to each other and together form a foot. The foot includes a drain outlet connected to the mast cavity, and a post-exit stage positioned downstream of the drain outlet with the post-exit stage being located closer to the mounting portions than the drain outlet.

In another embodiment, a method of making a drain mast includes joining two fairing bodies together to form a fairing. Each of the fairing bodies defines an inner fairing wall, an outer fairing wall, a mounting portion, a drain cavity outward from the mounting portion, and a drain portion outward from the drain cavity. Each of the drain cavities and the drain portions form a drain passage through the drain mast from a drain inlet to a drain outlet, and the outer fairing walls define an airfoil from a leading edge at an upstream end of the fairing to a trailing edge at a downstream end of the fairing. In addition, the drain portions are adjacent to each other and together form a foot that includes a drain outlet connected to the drain passage and a post-exit stage positioned downstream of the drain outlet with the post-exit stage being located inward from the drain outlet.

### BRIEF DESCRIPTION OF THE DRAWINGS

FIG. 1 is a side elevation view of an aircraft with two drain masts.
FIG. 2 is a perspective view of a non-water drain mast.
FIG. 3A is a side elevation view of one half of the non-water drain mast.
FIG. 3B is a side elevation view of the other half of the non-water drain mast.
FIG. 4 is a perspective view of a foot of the non-water drain mast and its non-water fluid steering features.
FIGS. 5A-5D are close-up views of the non-water fluid steering features of the non-water drain mast from line 5-5 in FIG. 3B.

### DETAILED DESCRIPTION

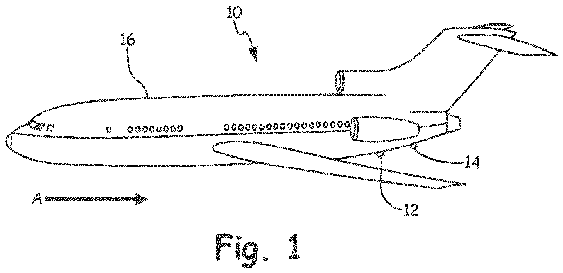

FIG. 1 is a side elevation view of an aircraft 10 with drain mast 12 and drain mast 14. Drain masts 12 and 14 are connected to fuselage 16 of aircraft 10 and discharge fluid from the interior of fuselage 16 into airstream A. Drain mast 12 is configured to discharge water, for example, potable water and/or gray water from the aircraft's plumbing system, and drain mast 14 is configured to discharge non-water fluids, for example, hydraulic oil and/or fuel. Drain masts 12 and 14 are separate because water has a tendency to freeze under regularly-encountered operating conditions, whereas the non-water fluids do not. Thereby, drain mast 12 has a heating system and drain mast 14 does not, and drain mast 14 does not handle water.

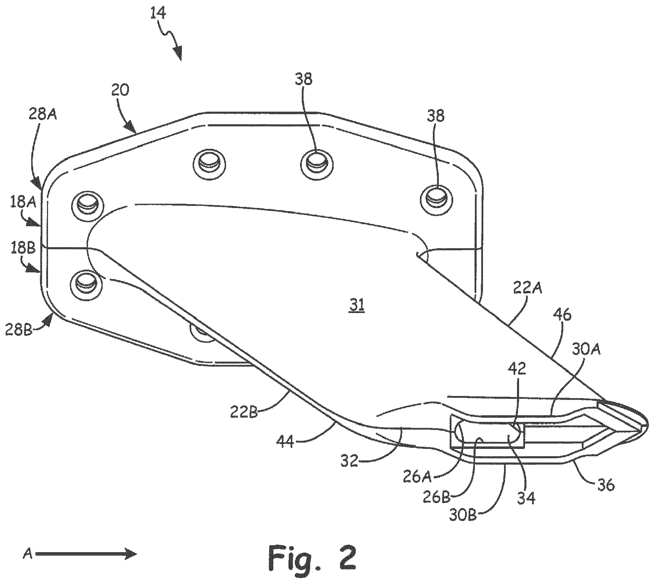

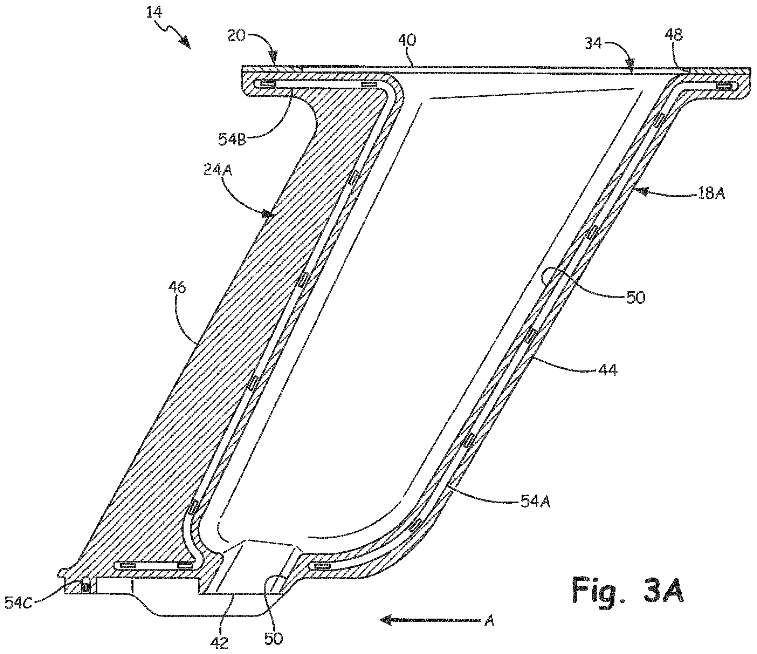

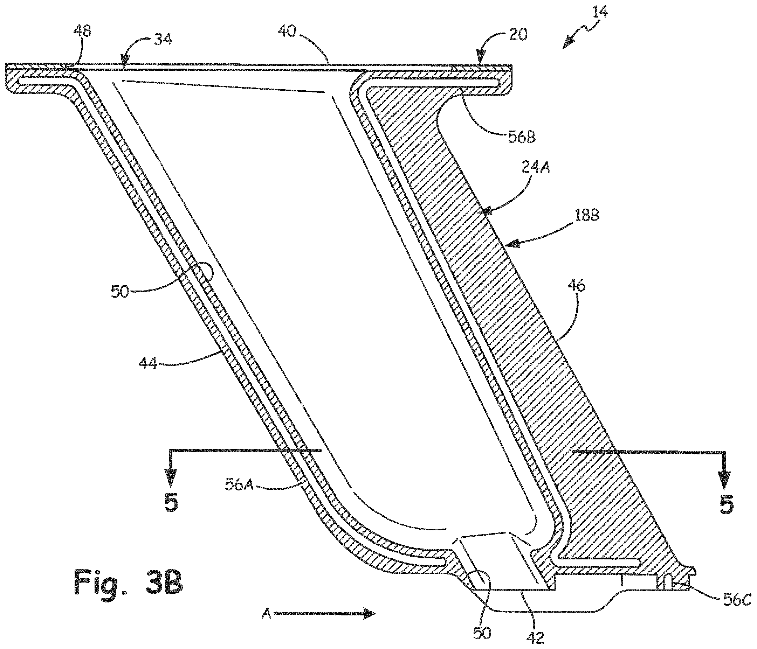

FIG. 2 is a perspective view of drain mast 14, which includes three components: fairing body 18A, fairing body 18B, and doubler 20. Fairing body 18A includes outer wall 22A, first inner wall 24A (shown in FIG. 3A) opposite of outer wall 22A, drain cavity 26A extending through the first inner wall 24A, mounting portion 28A at an inward end, and drain portion 30A opposite and outward of mounting portion 28A. Fairing body 18B has a symmetrical exterior to fairing body 18A and includes outer wall 22B, first inner wall 24B (shown in FIG. 3B) opposite of outer wall 22B, drain cavity 26B extending through the first inner wall 24B, mounting portion 28B at an inward end, and drain portion 30B opposite and outward of mounting portion 28B. Fairing bodies 18A and 18B are joined together along inner walls 24A and 24B to form fairing 31, as evidenced by seam 32, such that mounting portions 28A and 28B are adjacent, such that the drain cavities 26A and 26B form mast cavity 34, and such that drain portions 30A and 30B are adjacent to each other and together form foot 36.

In the illustrated embodiment, doubler 20 is a mounting member that extends across the inward end of fairing 31, adjacent to mounting portions 28A and 28B. Mounting portions 28A and 28B and doubler 20 include a plurality of mounting holes 38 through which fasteners (not shown) can be passed in order to secure drain mast 14 to fuselage 16 (shown in FIG. 1). Furthermore, mast cavity 34 extends through drain mast 14 from drain inlet 40 (shown in FIG. 3A) in doubler 20 to drain outlet 42 in foot 36. Drain mast 14 extends from fuselage 16 (shown in FIG. 1) into airstream A in order to position drain outlet 42 sufficiently into airstream A to allow the fluid exiting drain mast 14 to be carried away from fuselage 16 in airstream A. In order to reduce the amount of drag produced by drain mast 14, fairing 31 has an airfoil shape with leading edge 44 at the upstream end of fairing 31 and trailing edge 46 at the downstream end of fairing 31.

FIG. 3A is a side elevation view of one half of drain mast 14. FIG. 3B is a side elevation view of the other half of drain mast 14. FIGS. 3A and 3B will now be discussed in conjunction with each other.

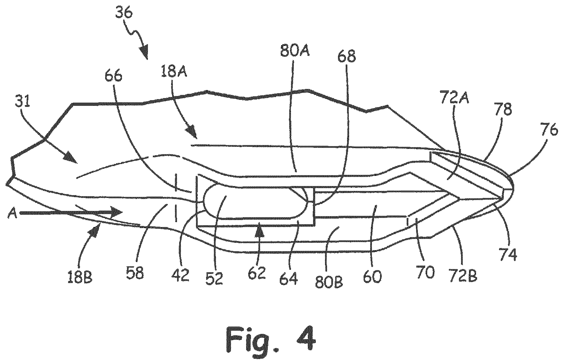

As stated previously, fairing body 18A includes inner wall 24A, fairing body 18B includes inner wall 24B, and doubler 20 includes drain inlet 40, and mast cavity 34 extends through drain mast 14. More specifically, doubler 20 includes port 48 with drain inlet 40 at the inward end, fairing 31 (shown in FIG. 2) includes plenum 50, and foot 36 includes channel 52 with drain outlet 42 at the outward end (as shown later with FIG. 4). Thereby, drain inlet 40, port 48, plenum 50, channel 52, and drain outlet 42 in fluid communication with one another. When assembled, mast cavity 34 is the only empty volume in drain mast 14 when drain mast 14 is not in use. In an alternative embodiment, a tube (not shown) can extend through mast cavity 34 that fluidly connects drain inlet 40 to drain outlet 42. In such an embodiment, both the tube and mast cavity 34 would be empty volumes when drain mast 14 was not in use.

Extending into inner wall 24A of fairing body 18A are three separate grooves 54A-54C, and extending from inner wall 24B of fairing body 18B are three separate tongues 56A-56C. Groove 54A and tongue 56A are positioned proximate leading edge 44, groove 54B and tongue 56B are positioned proximate trailing edge 46, and groove 54C and tongue 56C are positioned in foot 36. When fairing 31 is assembled (shown in FIG. 2), tongues 56A-56C are inserted into grooves 54A-54C, respectively, along with a bonding agent. This arrangement secures fairing bodies 18A and 18B together and resists shear forces along seam 32 (shown in FIG. 2). In addition, fairing bodies 18A and 18B are joined securely and completely enough to resist leakage through seam 32.

More specifically, the bonding agent can be applied to tongues 56A-56C and grooves 54A-54C as well as to inner walls 24A and 24B where fairing bodies 18A and 18B are in contact with one another. Once the bonding agent has been applied, fairing bodies 18A and 18B can be clamped together for curing of the bonding agent. Doubler 20 can be joined to fairing bodies 18A and 18B using the same bonding agent, although this step is optional.

In the illustrated embodiment, fairing bodies 18A and 18B are comprised of nonconductive and non-metallic composite materials, such as compression molded sheet molding compound (SMC), and the bonding agent between them is a structural grade epoxy, for example. However, fairing bodies 18A and 18B can be comprised of other materials and can be joined by conventional methods other than a tongue-in-groove arrangement that includes adhesive.

The components and configuration of drain mast 14 allow for non-water fluids to be collected in plenum 50 and expelled from drain mast 14 through drain outlet 42. These non-water fluids can come from a single or multiple sources and their flow through mast cavity 34 can be regulated using channel 52 which has a substantially smaller cross-sectional area than port 48 or plenum 50. Alternatively, multiple channels 52 and drain outlets 42 can control the flow of fluid(s) through drain mast 14. In either configuration, drain mast 14 would be able to discharge any expected flow rate so that the fluid would not back up into fuselage 16 (shown in FIG. 1). In addition, the exterior shape of drain mast 14 can be determined, to a degree, independently from the shape of mast cavity 34. This allows drain mast 14 to be more aerodynamic and have less drag. Making fairing 31 out of two pieces of composite material that can be adhered together also reduces weight, cost, and complexity.

FIG. 4 is a perspective view of foot 36 of drain mast 14, specifically of fairing 31, showing the fluid steering features of foot 36. Extending outward from the outward side of fairing 31 are prelude deck 58, which is a pre-exit stage positioned upstream of drain outlet 42, and finale deck 60, which is a post-exit stage positioned downstream of drain outlet 42. Pulpit 62 is situated between decks 58 and 60 and extends outward from fairing 31, farther from mounting portions 28A and 28B (shown in FIG. 2) than decks 58 and 60. Channel 52 extends transversely through the pulpit 62 whereby drain outlet 42 is located on the pulpit's outward face 64. At the upstream end of the pulpit 62, pulpit ramp 66 forms a gradual transition between outward face 64 and prelude deck 58. At the downstream end of the pulpit 62, pulpit wall 68 forms a sharp stepped transition between outward face 64 and finale deck 60. If, for example, outward face 64 is parallel with finale deck 60, then pulpit wall 68 can extend perpendicularly therebetween.

Bannister 70 extends outward along downstream edge of finale deck 60 and it can have a height approximately the same as that of the pulpit 62. Bannister 70 can span across the downstream edge of finale deck 60 in straight path, but a more funnel-like form may enhance the efficiency of this fluid-steering feature, especially when discharging fluid at a low flow rate. In the illustrated embodiment, for example, bannister 70 includes side sections 72A and 72B which angle inward and meet at downstream apex section 74 making a V-shape. This and other funnel-like forms will focus any discharging fluid towards the center of finale deck 60 to prevent lateral migration away from finale deck 60. Small fluid drips along finale deck 60 will be collected and concentrated towards apex section 74, for efficient shedding from foot 36. This functionality demonstrates the rationale for having fairing 31 bonded by groove 54C and tongue 56C (shown in FIGS. 3A and 3B). These two features are specifically positioned in apex section 74 to prevent the separation of fairing bodies 18A and 18B at apex section 74, which could otherwise negatively impact the flow of discharging fluids.

Converging lip 76 cantilevers aftward from the aft edges of finale deck 60 and thus extends beyond crest 78 and bannister 70. As shown but not indicated in FIGS. 3A and 3B, lip 76 also extends aftward beyond trailing edge 46. Lip 76 has a shape that causes airstream A to flow substantially evenly therearound. For example, lip 76 can have a duckbill shape with smooth inward and outward surfaces that taper towards each other and smooth lateral edges that converge towards each other in the fore-aft direction.

Rails 80A and 80B can extend outward from the lateral edges of fairing 31 to form side fences around finale deck 60. Rails 80A and 80B can also surround some or all of prelude deck 58 and/or pulpit 62. The height of rails 80A and 80B can be slightly taller than that of pulpit 62 and/or bannister 70.

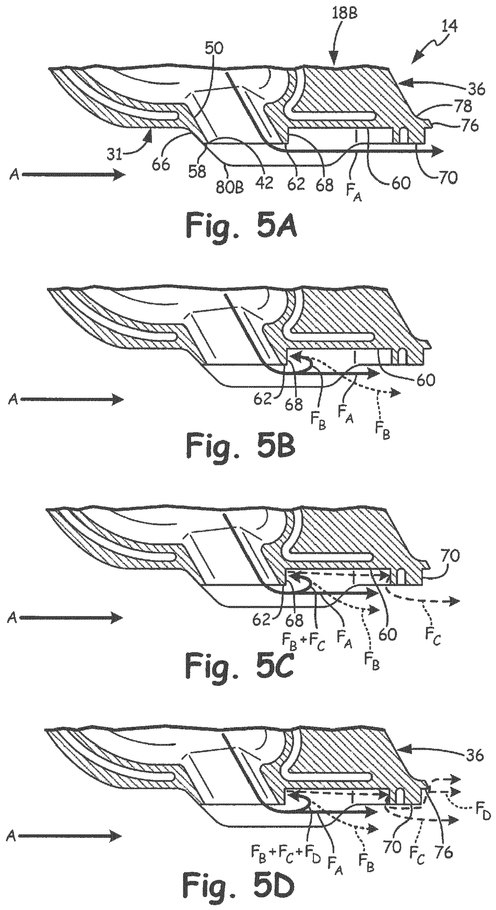

FIGS. 5A-5D are close-up views of the non-water fluid steering features of drain mast 14 from line 5-5 in FIG. 3B.. FIGS. 5A-5D demonstrate exemplary flow paths which fluid can take as it is being discharged from drain mast 14. For example, as shown in FIG. 5A, fluid F_{A} leaving drain outlet 42 is positioned outward of finale deck 60. Assuming the airstream A has a vector substantially parallel with finale deck 60, fluid F_{A} is swept in a path outward of finale deck 60 and beyond drain mast 14, as it passes over or off of pulpit 62.

As shown in FIG. 5B, in addition to fluid F_{A}, fluid F_{B} has crept inward and engaged an upstream portion of finale deck 60. Fluid F_{B} is forced into contact pulpit wall 68 as air from airstream A swirls around pulpit 62. Fluid F_{B} then migrates outward to the downstream corner of pulpit wall 68 where fluid F_{B} is carried off by airstream A.

As shown in FIG. 5C, in addition to fluids F_{A} and F_{B}, fluid F_{C} has crept inward and engaged a downstream portion of finale deck 60. Instead of contacting pulpit wall 68, fluid F_{C} travels along finale deck 60 to bannister 70. Bannister 70 forces fluid F_{C} outward from finale deck 60 where fluid F_{C} is swept away by airstream A.

As shown in FIG. 5D, in addition to fluids F_{A}, F_{B}, and F_{C}, fluid F_{D} has climbed over bannister 70. Fluid F_{D} is then positioned on lip 76. Foot 36 is configured to encourage airstream A to flow substantially evenly around lip 76. Thus, fluid F_{D} on lip 76 is removed by airstream A.

The incorporation of these efficient and effective fluid-steering features into drain mast 14 allows for drain mast 14 to be smaller in size and lighter in weight to generate less drag. In general, the components and configuration of drain mast 14 allows for drain mast 14 to effectively and efficiently discharge non-water fluids into airstream A while providing for simple and inexpensive manufacture of drain mast 14.

### Discussion of Possible Embodiments

The following are non-exclusive descriptions of possible embodiments of the present invention.

A drain mast that releases fluid into an airstream, according to an exemplary embodiment of this disclosure, among other possible things, includes: a first fairing body comprising: a first outer wall; a first inner wall opposite of the first outer wall; a first drain cavity extending through the first inner wall; a first mounting portion; and a first drain portion opposite of the first mounting portion; and a second fairing body comprising: a second outer wall; a second inner wall opposite of the second outer wall; a second drain cavity extending through the second inner wall; a second mounting portion; and a second drain portion opposite of the second mounting portion; wherein the first and second fairing bodies are joined together at the first and second inner walls such that the first and second mounting portions are adjacent, such that the first and second drain cavities form a mast cavity, and such that the first and second drain portions are adjacent to each other and together form a foot, wherein the foot comprises: a drain outlet in fluid communication with the mast cavity; and a post-exit stage positioned downstream of the drain outlet, the post-exit stage being located closer to the first and second mounting portions than the drain outlet.

The drain mast of the preceding paragraph can optionally include, additionally and/or alternatively, any one or more of the following features, configurations and/or additional components:

A further embodiment of the foregoing drain mast, wherein the first inner wall can include a plurality of grooves and the second inner wall can include a plurality of tongues configured to be inserted into the plurality of grooves.

A further embodiment of any of the foregoing drain masts, wherein the plurality of grooves can comprise three separate grooves and the plurality of tongues can comprise three separate tongues.

A further embodiment of any of the foregoing drain masts, wherein a first groove can be positioned upstream of the first drain cavity; a second groove can be positioned downstream of the first drain cavity; a third grove can be positioned in the foot; a first tongue can be positioned upstream of the second drain cavity; a second tongue can be positioned downstream of the second drain cavity; a third tongue can be positioned in the foot.

A further embodiment of any of the foregoing drain masts, wherein an aircraft can comprise: a fuselage; the drain mast of claim 1 that is attached to the fuselage for discharging non-water fluid; and a separate water drain mast that is attached to the fuselage for discharging water.

A further embodiment of any of the foregoing drain masts, wherein the first mounting portion can include a first plurality of mounting holes; and the second mounting portion can include a second plurality of mounting holes.

A further embodiment of any of the foregoing drain masts, wherein the drain mast can further comprise: a mounting member positioned adjacent to the first and second mounting portions.

A further embodiment of any of the foregoing drain masts, wherein the mounting member can include a third plurality of mounting holes that aligns with the first and second pluralities of mounting holes.

A further embodiment of any of the foregoing drain masts, wherein the mounting member can include a port adjacent to the first and second drain cavities and an inlet at an inward end of the port.

A further embodiment of any of the foregoing drain masts, wherein the mast cavity can comprise; a plenum; and a channel that is fluidly connected to the plenum; wherein the drain outlet is at an outward end of the channel.

A further embodiment of any of the foregoing drain masts, wherein the first and second fairing bodies can be comprised of a non-metallic composite material.

A further embodiment of any of the foregoing drain masts, wherein the foot can further comprise: a pulpit on which the drain outlet is positioned.

A further embodiment of any of the foregoing drain masts, wherein the foot can further comprise: a banister positioned downstream of the post-exit stage and extending farther from the first and second mounting portions than the post-exit stage.

A further embodiment of any of the foregoing drain masts, wherein the bannister can further comprise: an apex section positioned at a downstream end of the bannister.

A further embodiment of any of the foregoing drain masts, wherein the foot can further comprise: a lip positioned downstream of the bannister and being located closer to the first and second mounting portions than the bannister.

A further embodiment of any of the foregoing drain masts, wherein the foot can further comprise: a first rail extending along a first side of the post-exit stage; and a second rail extending along a second side of the post-exit stage; wherein the first and second rails extending farther from the first and second mounting portions than the post-exit stage.

A method of making a drain mast, according to an exemplary embodiment of this disclosure, among other possible things, includes: joining a first fairing body to a second fairing body to form a fairing, wherein: the first fairing body defines a first inner fairing wall, a first outer fairing wall, a first mounting portion, a first drain cavity outward from the first mounting portion, and a first drain portion outward from the first drain cavity, and wherein the second fairing body defines a second inner fairing wall, a second outer fairing wall, a second mounting portion, a second drain cavity outward from the second mounting portion, and a second drain portion outward from the second drain cavity; the first and second drain cavities and the first and second drain portions form a drain passage through the drain mast from a drain inlet to a drain outlet; and wherein the first and second outer fairing walls define an airfoil from a leading edge at an upstream end of the fairing to a trailing edge at a downstream end of the fairing, and wherein the first and second drain portions are adjacent to each other and together form a foot, wherein the foot comprises a drain outlet in fluid communication with the drain passage, and a post-exit stage positioned downstream of the drain outlet, the post-exit stage being located inward from the drain outlet.

The method of the preceding paragraph can optionally include, additionally and/or alternatively, any one or more of the following features, configurations and/or additional components:

A further embodiment of the foregoing method, wherein the step of joining the first fairing body to the second fairing body can comprise: applying a bonding agent to at least one of the first and second fairing bodies; and clamping the first and second fairing bodies together.

A further embodiment of any of the foregoing methods, wherein applying the bonding agent can comprise: applying the bonding agent to a foot of one of the first and second fairing bodies.

A further embodiment of any of the foregoing methods, wherein the method can further comprise: fastening the fairing to a mounting member and to a fuselage of an aircraft.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A drain mast (12, 14) that releases fluid into an airstream comprising:
a first fairing body (18A) comprising:
a first outer wall (22A);
a first inner wall (24A) opposite of the first outer wall (22A);
a first drain cavity (26A) extending through the first inner wall (24A);
a first mounting portion (28A); and
a first drain portion (30A) opposite of the first mounting portion (28A); and
a second fairing body (18B) comprising:
a second outer wall (24A);
a second inner wall (24B) opposite of the second outer wall (24A);
a second drain cavity (26B) extending through the second inner wall (24B);
a second mounting portion (28B); and
a second drain portion (30B) opposite of the second mounting portion (28B);
wherein the first and second fairing bodies (18A, 18B) are joined together at the first and second inner walls (24A, 24B) such that the first and second mounting portions (28A, 28B) are adjacent, such that the first and second drain cavities (26A, 26B) form a mast cavity (34), and such that the first and second drain portions (30A, 30B) are adjacent to each other and together form a foot (36), wherein the foot (36) comprises:
a drain outlet (40) in fluid communication with the mast cavity (34); and
a post-exit stage positioned downstream of the drain outlet (40), the post-exit stage being located closer to the first and second mounting portions than the drain outlet.

2. The drain mast of claim 1, wherein the first inner wall (24A) includes a plurality of grooves (54A, 54B) and the second inner wall (24B) includes a plurality of tongues configured to be inserted into the plurality of grooves (54A-C).

3. The drain mast of claim 2, wherein the plurality of grooves (54A-C) comprises three separate grooves and the plurality of tongues comprises three separate tongues (56A-C), and preferably wherein:
a first groove (54A) is positioned upstream of the first drain cavity (26A);
a second groove (54B) is positioned downstream of the first drain cavity (26A);
a third grove (54C) is positioned in the foot;
a first tongue (56A) is positioned upstream of the second drain cavity (26B);
a second tongue (56B) is positioned downstream of the second drain cavity (26B);
a third tongue (56C) is positioned in the foot (36);

4. The drain mast of any preceding claim, wherein:
the first mounting portion (28A) includes a first plurality of mounting holes; and
the second mounting portion (28B) includes a second plurality of mounting holes.

5. The drain mast of claim 4, further comprising:
a mounting member positioned adjacent to the first and second mounting portions.

6. The drain mast of claim 5, wherein the mounting member includes a third plurality of mounting holes that aligns with the first and second pluralities of mounting holes, and/or
wherein the mounting member includes a port adjacent to the first and second drain cavities and an inlet at an inward end of the port.

7. The drain mast of any preceding claim, wherein the mast cavity comprises;
a plenum (50); and
a channel (52) that is fluidly connected to the plenum (50);
wherein the drain outlet (42) is at an outward end of the channel (52).

8. The drain mast of any preceding claim, wherein the first and second fairing bodies (18A, 18B) are comprised of a non-metallic composite material, and/or
wherein the foot (36) further comprises:
a pulpit (62) on which the drain outlet (40) is positioned.

9. The drain mast of any preceding claim, wherein the foot further comprises:
a banister (70) positioned downstream of the post-exit stage and extending farther from the first and second mounting portions (28A, 28B) than the post-exit stage.

10. The drain mast of claim 9, wherein the bannister further comprises:
an apex section positioned at a downstream end of the bannister (70), and
preferably
wherein the foot further comprises:
a lip (76) positioned downstream of the bannister (70) and being located closer to the first and second mounting portions than the bannister (70).

11. The drain mast of any preceding claim, wherein the foot (36) further comprises:
a first rail (80A) extending along a first side of the post-exit stage; and
a second rail (80B) extending along a second side of the post-exit stage;
wherein the first and second rails extending farther from the first and second mounting portions than the post-exit stage.

12. An aircraft comprising:
a fuselage;
the drain mast of any preceding claim that is attached to the fuselage for discharging non-water fluid; and
a separate water drain mast that is attached to the fuselage for discharging water.

13. A method of making a drain mast comprising:
joining a first fairing body (18A) to a second fairing body (18B) to form a fairing,
wherein:
the first fairing body (18A) defines a first inner fairing wall (24A), a first outer fairing wall (22A), a first mounting portion (28A), a first drain cavity (26A) outward from the first mounting portion (28A), and a first drain portion (30A) outward from the first drain cavity (26A), and wherein the second fairing body (18B) defines a second inner fairing wall (24B), a second outer fairing wall, a second mounting portion (28B), a second drain cavity (26B) outward from the second mounting portion (28B), and a second drain portion (30B) outward from the second drain cavity (26B);
the first and second drain cavities (26A, B) and the first and second drain portions (30A, B) form a drain passage through the drain mast (12, 14) from a drain inlet to a drain outlet (40); and
wherein the first and second outer fairing walls define an airfoil from a leading edge at an upstream end of the fairing to a trailing edge at a downstream end of the fairing, and
wherein the first and second drain portions (30A, B) are adjacent to each other and together form a foot (36), wherein the foot (36) comprises a drain outlet (40) in fluid communication with the drain passage, and a post-exit stage positioned downstream of the drain outlet (40), the post-exit stage being located inward from the drain outlet (40).

14. The method of claim 13, wherein the step of joining the first fairing body (18A) to the second fairing body (18B) comprises:
applying a bonding agent to at least one of the first and second fairing bodies (18A, 18B); and
clamping the first and second fairing bodies (18A, 18B) together, and preferably wherein applying the bonding agent comprises:
applying the bonding agent to a foot (36) of one of the first and second fairing bodies (18A, B).

15. The method of claim 13 or 14, further comprising:
fastening the fairing to a mounting member and to a fuselage of an aircraft.
